(19) Europäisches Patentamt
European Patent Office
Office européen des brevets

(11) **EP 2 226 480 B1**

(12) **EUROPÄISCHE PATENTSCHRIFT**

(45) Veröffentlichungstag und Bekanntmachung des Hinweises auf die Patenterteilung:
**11.05.2011  Patentblatt 2011/19**

(51) Int Cl.:
***F01N 3/20*** *(2006.01)*

(21) Anmeldenummer: **10001701.1**

(22) Anmeldetag: **19.02.2010**

(54) **Verfahren zur Einstellung der Dosierungen des Reduktionsmittels bei selektiver katalytischer Reduktion**

Method for setting the dosage amount of a reduction agent for selective catalytic reduction

Procédé de réglage des dosages du moyen de réduction lors de la réduction catalytique sélective

(84) Benannte Vertragsstaaten:
**AT BE BG CH CY CZ DE DK EE ES FI FR GB GR HR HU IE IS IT LI LT LU LV MC MK MT NL NO PL PT RO SE SI SK SM TR**

(30) Priorität: **06.03.2009  DE 102009012093**

(43) Veröffentlichungstag der Anmeldung:
**08.09.2010  Patentblatt 2010/36**

(73) Patentinhaber: **MAN Truck & Bus AG**
**80995 München (DE)**

(72) Erfinder:
• **Döring, Andreas**
**80339 München (DE)**
• **Steinert, Ralf**
**90475 Nürnberg (DE)**
• **Walde, Florian**
**90599 Dietenhofen (DE)**
• **Munitzk, Henry**
**90562 Heroldsberg (DE)**
• **Philipp, Jochen**
**91080 Uttenreuth (DE)**

(56) Entgegenhaltungen:
DE-A1-102008 017 543    US-A1- 2004 055 284
US-A1- 2004 098 974    US-A1- 2004 098 978
US-A1- 2006 000 202    US-A1- 2006 096 278

**Beschreibung**

Die Erfindung richtet sich auf ein Verfahren gemäß dem Oberbegriff des Anspruches 1.

Neben Feststoffpartikeln gehören Stickoxide zu den limitierten Abgaskomponenten, die während Verbrennungsvorgängen entstehen und deren erlaubte Emissionen immer weiter abgesenkt werden. Zur Minimierung dieser Abgaskomponenten bei in Kraftfahrzeugen betriebenen Brennkraftmaschinen werden heute unterschiedliche Verfahren eingesetzt. Die Verringerung der Stickoxide geschieht meist mit Hilfe von Katalysatoren. In sauerstoffreichem Abgas ist zusätzlich ein Reduktionsmittel erforderlich, um die Selektivität und die $NO_x$-Umsätze anzuheben.

Bekannt geworden sind diese Verfahren unter dem Sammelbegriff SCR-Verfahren, wobei SCR für "selektive katalytische Reduktion" steht. Ihr Einsatz erfolgt seit vielen Jahren im Kraftwerksbereich und in jüngster Zeit auch bei Brennkraftmaschinen. Eine ausführliche Darstellung solcher Verfahren ist der DE 34 28 232 A1 zu entnehmen. Als SCR-Katalysatoren können $V_2O_5$-haltige Mischoxide, beispielsweise in der Form $V_2O_5/WO_3/TiO_2$, verwendet werden. Typische $V_2O_5$-Anteile liegen dabei zwischen 0,2-3%. Auch der Einsatz von eisen- und/oder kupferhaltigen Zeolithen ist denkbar.

Als Reduktionsmittel kommen in der praktischen Anwendung Ammoniak oder Ammoniak abspaltende Verbindungen, wie Harnstoff oder Ammoniumformiat in fester oder Lösungsform zum Einsatz.

So zerfällt der Harnstoff bei hohen Temperaturen zu Isocyansäure und Ammoniak.

$$(NH_2)_2CO \Leftrightarrow NH_3 + HNCO \qquad (1)$$

Die Isocyansäure hydrolysiert mit im Abgas enthaltenem Wasser weiter zu $NH_3$ und $CO_2$.

$$HNCO + H_2O \Rightarrow NH_3 + CO_2 \qquad (2)$$

Bei vollständiger Hydrolyse von einem Mol Harnstoff entstehen somit zwei Mol Ammoniak und ein Mol Kohlendioxid.

$$(NH_2)_2CO + H_2O \Rightarrow 2NH_3 + CO_2 \qquad (3)$$

Dadurch steht durch die Hydrolyse von Harnstoff dasselbe bewährte Reduktionsmittel wie im Kraftwerksbereich, nämlich Ammoniak, zur Verfügung.

Für die Umsetzung von einem Mol Stickstoffmonoxid ist dabei ein Mol Ammoniak notwendig.

$$4NO + 4NH_3 + O_2 \Rightarrow 4N_2 + 6H_2O \qquad (4)$$

Das Verhältnis zwischen $NH_3$ und $NO_x$ wird als Feedverhältnis $\alpha$ bezeichnet.

$$\alpha = NH_3/NO_X$$

Bei einem idealen Katalysator bedeutet dies, dass bei einem Feedverhältnis von eins alle Stickoxide reduziert werden, also ein 100%-iger $NO_x$ - Umsatz erreicht wird, da für den $NO_x$-Umsatz $X_{NOx}$ gilt:

$$X_{NOx} = \frac{c_{NOx,0} - c_{NOx}}{c_{NOx,0}}$$

mit:

$C_{NOx,0}$ : $NO_x$-Rohemissionen [ppm]
$C_{NOx}$ : : $NO_x$-Emissionen nach Katalysator [ppm]

Wird den SCR-Katalysatoren ein platinhaltiger NO-Oxidationskatalysator zur Bildung von $NO_2$ vorgeschaltet

$$2NO + O_2 \Leftrightarrow 2NO_2 \qquad (5)$$

So kann die SCR-Reaktion erheblich beschleunigt und die Tieftemperaturaktivität merklich angehoben werden.

$$NO+2NH_3+NO_2 \Rightarrow 2N_2+3H_2O \qquad (6)$$

Allerdings ist in Gegenwart von $NO_2$ auch mit erhöhten Lachgasemissionen nach folgender Reaktion zu rechnen:

$$2NH_3 + 2NO_2 + \tfrac{1}{2}O_2 \Leftrightarrow 2N_2O + 3H_2O \qquad (7)$$

Bei in Fahrzeugen betriebenen Brennkraftmaschinen gestaltet sich die Stickoxidreduzierung mit Hilfe des SCR-Verfahrens deshalb schwierig, weil dort wechselnde Betriebsbedingungen, wie schwankende Abgastemperaturen, Abgasmengen und $NO_x$-Rohemissionen, vorliegen, was die mengenmäßige Zumessung des Reduktionsmittels erschwert. Es soll zwar einerseits ein möglichst hoher Umsatz an Stickoxiden erreicht werden, andererseits ist aber darauf zu achteten, dass es nicht zur Emission von Lachgas, Isocyansäure oder unverbrauchtem Ammoniak kommt.

Aktuell werden bei der Zudosierung des Reduktionsmittels für das SCR-Verfahren in Fahrzeugen zwei Verfahren zur Bestimmung der korrekten Reduktionsmitteldosiermenge verwendet.

Zum einen ist dies eine reine Steuerung ohne Rückmeldung von Sensoren zur Bestimmung der tatsächlichen Emissionen hinter dem Katalysatorsystem. Die Dosiermenge wird dabei mit Hilfe von Modellen, aus Daten, die in einem Speicher eines elektronischen Motorsteuergerätes einer Brennkraftmaschine in Form von Tabellen bzw. Kurven, Kennfeldern oder Funktionen abgelegt sind und/oder ermittelt werden, und gegebenenfalls mit Hilfe von Sensoren zur Bestimmung der Katalysatortemperatur, der $NO_x$- und Abgasmenge bestimmt. So wird beispielsweise die Rohemission des Motors aus der Einspritzmenge, der Motordrehzahl, dem Einspritzdruck, dem Kraftstoff/Luftverhältnis usw. berechnet. Die möglichen $NO_x$-Umsätze und die dafür nötigen Dosiermengen an Reduktionsmittel hängen wiederum von der Katalysatortemperatur, der $NO_x$-Rohemission, der Abgasmenge etc. ab. Die tatsächlichen Emissionen hinter dem System werden nicht detektiert und haben somit keinen Einfluss auf die Dosiermenge (DE 43 15 278 A1, DE 195 36 571 A1, DE 199 06 344 A1, EP 898 061 A1).

Der Nachteil dieses Verfahrens besteht darin, dass, auf Grund der fehlenden Rückmeldung über die tatsächlichen Emissionen, Fehler, Defekte oder Umwelteinflüsse kaum ausgeglichen werden können.

Die zweite Möglichkeit der Zudosierung des Reduktionsmittels besteht darin, einen klassischen geschlossenen Regelkreis mit Hilfe von HNCO-, $N_2O$-, $NO_x$- und/oder $NH_3$-Sensoren hinter dem System aufzubauen. Hierfür werden die von den Sensoren aktuell gelieferten Ist-Werte mit den Soll-Werten verglichen und die Dosiermenge laufend angepasst. Allerdings besteht das Problem der permanenten Regelung in der Trägheit des Systems und der Sensoren sowie des gleichzeitig hochdynamischen Betriebs der Brennkraftmaschine in Fahrzeugen. So können beispielsweise während Beschleunigungsvorgängen bzw. Lastaufschaltungen an abgasaufgeladenen Brennkraftmaschinen innerhalb einer Sekunde die $NO_x$-Emissionen um den Faktor 10 ansteigen. Bei Saugmotoren erfolgt der Anstieg auf Grund der fehlenden Trägheit des Abgasturboladers noch schneller. Gleiches gilt bei Lastabwurf bzw. beim Übergang in den Schubbetrieb.

Die Sensoren zur Bestimmung der Emissionen sind nicht in der Lage, diese hochdynamischen Vorgänge zu detektieren. Zum einen liegt dies an der Trägheit der Sensoren, deren typische t90-Zeit, also die Zeit, bei der 90% des Endwertes erreicht sind, bei 300-500ms anzusiedeln sind, zum anderen an der notwendigen Positionierung der Sensoren hinter dem Katalysatorsystem. So beträgt allein die Gaslaufzeit vom Austritt aus dem Zylinderkopf bis zum Austritt aus dem Katalysatorsystem je nach Abgasvolumenstrom und Volumen der Abgasanlage 200-2000ms.

Um diesem Problem abzuhelfen wird in der DE 101 00420 A1 eine gattungsgemäßes Abgasnachbehandlungssystems und ein Verfahren zur Steuerung dieses Abgasnachbehandlungssystems, insbesondere für eine Brennkraftmaschine, vorgeschlagen, das dieses Problem teilweise löst. Dem Abgasnachbehandlungssystem, das wenigstens einen Katalysator umfasst, wird abhängig vom Betriebszustand der Brennkraftmaschine und/oder des Abgasnachbehandlungssystems eine vorgegebene Menge an Reduktionsmittel zugeführt. Die Menge an zugeführtem Reduktionsmittel wird adaptiert. Dazu wird im stationären Betrieb der Brennkraftmaschine über Sensoren der Ausstoß an Stickoxiden bzw. an Ammoniak gemessen und mit für diesen stationären Betriebszustand gespeicherten Sollwerten verglichen. Wird eine Abweichung festgestellt, ermittelt die Steuerung des Abgasnachbehandlungssystems einen Korrekturwert, mit dem die zugeführte Reduktionsmittelmenge angepasst, also adaptiert wird.

Nachteilig bei diesem System ist, dass die Adaptation, wegen der oben beschriebenen Trägheit des Systems, nur in einer relativ langen stationären Betriebsphase bei vorgegebenen Betriebsparametern der Brennkraftmaschine erfolgen kann. Unter stationären Betriebsbedingungen wird dabei verstanden, dass die die Reduktionsmittelzumessung bestimmenden Betriebsgrößen sich nicht oder nur minimal ändern dürfen. Solche stationären Betriebsphasen treten bei bestimmten Betriebsarten der Brennkraftmaschine, z.B. wenn diese in einem Fahrzeug betrieben wird und sich das Fahrzeug im Stadtverkehr bewegt, über längere Zeiträume nicht auf. Dadurch kann über längere Zeiträume eine Korrektur der Reduktionsmittelmenge nicht erfolgen, es kommt also zu einem erhöhten Schadstoffausstoß an Stickoxiden bzw. an Ammoniak.

Ein weiterer Ansatz, der geschilderten Problematik zu begegnen ist der DE 195 36 571 A1 zu entnehmen. Dort ist ein Verfahren sowie eine zugehörige Vorrichtung zur Dosierung der Eingabemenge eines Reduktionsmittels in den Abgas- oder Abluftstrom von Verbrennungsanlagen, insbesondere Verbrennungsmotoren, mit nachgeschaltetem Katalysator beschrieben. Die Einstellung der Eingabemenge des Reduktionsmittels erfolgt, ausgehend von betriebsrelevanten Parametern der Verbrennungsanlage, des Abgases und des Katalysators, über Kennlinien (-felder), wobei die Lage der Kennlinien(-felder) überprüft und an den aktuellen Zustand sowie die aktuellen Betriebsbedingungen des Verbrennungsmotors, des Abgases und des Katalysators angepasst wird. Es erfolgt also eine Adaptation der Kennlinien oder Kennfelder durch einen Vergleich der mittels Sensoren bestimmten Ist-Schadstoffkonzentration mit gespeicherten Soll-Werten.

Auch bei dieser Vorgehensweise bedingt die große Trägheit des Systems, insbesondere der Sensoren, dass eine Überprüfung nur bei Vorliegen stationärer Betriebsbedingungen der Brennkraftmaschine möglich ist, so dass die vorstehend zur DE 101 00420 A1 beschriebenen Nachteile auch hier zutreffen.

Die DE 10 2008 017 543 A1 beschreibt in Dosiermodul für ein Fahrzeug umfasst ein Basisdosismodul, ein Dosisanpassungsmodul und ein Dosisermittlungsmodul. Das Basisdosismodul erzeugt ein Basisdosissignal, das einem Massenstrom eines Dosiermittels entspricht. Das Dosisanpassungsmodul empfängt ein Ammoniak($NH_3$)-Signal und ermittelt, beruhend auf dem $NH_3$-Signal, eine erste Dosisanpassung. Das $NH_3$-Signal gibt stromabwärts eines Katalysators gemessenes $NH_3$ an. Das Dosisermittlungsmodul erzeugt, beruhend auf dem Basisdosissignal und der ersten Dosisanpassung, ein Dosiersignal.

Der Erfindung liegt die Aufgabe zu Grunde, die Nachteile der bekannten Verfahren zu vermeiden. Diese Aufgabe wird gelöst durch das Verfahren gemäß Patentanspruch 1, vorteilhafte Ausgestaltungen des Verfahrens sind in den Unteransprüchen gekennzeichnet.

Das erfindungsgemäße Verfahren wird in Verbindung mit einer Abgasnachbehandlungsanlage zur Dosierung eines ammoniakabspaltenden Reduktionsmittels in den Abgasstrom einer, in einem Fahrzeug verbauten mit Luftüberschuss betriebenen Brennkraftmaschine angewandt. Wie bei solchen Anordnungen üblich, erfolgt die Dosierung des Reduktionsmittels mit Hilfe einer von einem Steuergerät gesteuerten, der Abgasnachbehandlungsanlage zugeordneten Dosiereinrichtung. Zur Stickoxidreduktion ist stromab zur Dosiereinrichtung im Abgasstrom, als weiterer Teil der Abgasnachbehandlungsanlage, wenigstens ein SCR-Katalysator angeordnet.

Die Dosiermenge des Reduktionsmittels - bei heute üblichen Anlagen handelt es sich meist um wässrige Harnstofflösung, aber auch andere Reduktionsmittel (Ammoniak oder Ammoniak abspaltende Verbindungen, wie Harnstoff oder Ammoniumformiat in fester oder Lösungsform) sind denkbar - wird von dem Steuergerät mit Hilfe eines in diesem gespeicherten, alle möglichen Betriebspunkte der Brennkraftmaschine bzw. der Abgasnachbehandlungsanlage abdeckenden Models vorgenommen.

Unter einem Modell ist dabei im einfachsten Fall eine Kennlinie oder ein Kennlinienfeld zu verstehen, es kann sich aber auch um eine Vielzahl von Kennlinien, Kennlinienfelder oder auch um ein- oder mehrparametrige Funktionen handeln, die mit Hilfe einer sogenannten Referenzanordnung und/ oder durch theoretische Überlegungen ermittelt bzw. festgelegt werden. Bei der Referenzanordnung handelt es sich im vorliegenden Fall um eine für eine Baureihe typische Anordnung aus Brennkraftmaschine und Abgasnachbehandlungssystem die bereits in einem Fahrzeug verbaut sein kann. Durch Messungen an der Referenzanordnung und/ oder durch theoretische Überlegungen wird für eine Vielzahl von Betriebspunkten der Anordnung einerseits eine Dosiermenge des Reduktionsmittels bestimmt und andererseits zu diesen Betriebspunkten eine Soll-Emission ermittelt. Jeder Betriebspunkt wird dabei durch die Größe wenigstens eines Betriebsparameters der Referenzanordnung definiert. Die ermittelten Dosiermengen und die zugehörigen Soll-Emissionen oder Soll-Umsätze werden in Form eines Modells in den Steuergeräten der entsprechenden Baureihe vorgehalten, derart, dass aus dem Modell, für alle möglichen Größen, die der wenigstens eine Betriebsparameter annehmen kann, also für alle Betriebspunkte die vorkommen, eine der Dosiermenge und eine der Soll-Emmision oder Soll-Umsätze proportionalen Größe direkt oder durch Interpolation mittels des Steuergerätes gewonnen werden kann.

Aus diesem Modell, also den Kennlinien, Kennlinienfelder oder Funktionen ermittelt die Steuereinheit in Abhängigkeit von dem wenigstens einen durch das Steuergerät ausgewerteten Betriebsparameter der Brennkraftmaschine und/ oder der Abgasnachbehandlungsanlagen die Dosiermenge. Der jeweilige Augenblickswert des wenigstens einen Betriebsparameters bestimmt dabei den jeweiligen Betriebspunkt der Brennkraftmaschine und/oder der Abgasnachbehandlungsanlage. In der Praxis handelt es sich häufig nicht um nur einen, sondern um eine Vielzahl von Betriebsparametem. die Einfluss auf die richtige Dosiermenge des Reduktionsmittels haben, folglich ist diese mehrfache Abhängigkeit im Modell zu berücksichtigen.

Nachdem diese mehrfache Abhängigkeit aber nicht konstant ist, sondern insbesondere eine zeitliche, also durch die Anzahl der Betriebsstunden einer Anlage bedingten, sowie einer durch Umwelteinflüsse bedingten Änderung unterliegt, muss die über das Modell ermittelte Dosiermenge einer Korrektur unterzogen werden. Dazu wird vorteilhaft so vorgegangen, dass während des Betriebs der Brennkraftmaschine, das Steuergerät durch Vergleich einer für die Brennkraftmaschine und/oder die Abgasnachbehandlungsanlage mittels des Steuergerätes der Bennkraftmaschine aus gespeicherten Werten ermittelten, der Soll-Emission oder der Soll-Umsätze proportionalen Größe, mit einer messtechnisch vom Steuergerät erfassten, der Ist-Emission oder der Ist-Umsätze proportionalen Größe, eine Abweichung ermittelt und in Abhängigkeit von dieser Abweichung einen Korrekturwert für die Dosiermenge bestimmt. Für nachfolgende Dosiervorgänge wird dann das gespeicherte Modell durch das Steuergerät mit diesem Korrekturwert modifiziert.

Die Modifikation des Modells mit dem Korrekturwert wird jeweils so lange beibehalten bis das Steuergerät durch Vergleich einer für die Brennkraftmaschine und/oder die Abgasnachbehandlungsanlage mittels des Steuergerätes der Bennkraftmaschine aus gespeicherten Werten ermittelten, der Soll-Emission oder der Soll-Umsätze proportionalen Größe, mit einer messtechnisch vom Steuergerät erneut erfassten, der Ist-Emission oder der Ist-Umsätze proportionalen Größe, eine Abweichung ermittelt und in Abhängigkeit von dieser Abweichung einen neuen Korrekturwert für die Dosiermenge bestimmt. Für nachfolgende Dosiervorgänge wird dann das gespeicherte Modell mit diesem neuen Korrekturwert modifiziert.

Zur Erfassung des Ist-Emissionswertes oder der Ist-Umsätze einer Brennkraftmaschine mit nachgeordneter Abgasnachbehandlungsanlage ist einerseits eine gewisse Zeit erforderlich, über die das Signal eines $NO_x$-Sensors und/ oder eines $NH_3$-Sensors und/ oder eines $N_2O$-Sensors aufsummiert oder aufintegriert wird, zusätzlich dürfen sich die Betriebsbedingungen dabei möglichst nicht ändern. Dies schränkte die Ermittlung von Ist-Emissionswerten oder Ist-Umsätzen an sich auf stationäre Betriebszustände ein. Um dennoch für die Ermittlung des Korrekturwertes in vorteilhafter Weise eine Unabhängigkeit von stationären Betriebsbedingungen zu erhalten, wird bei der Ermittlung der Ist-Emission oder der Ist-Umsätze nach dem erfindungsgemäßen Verfahren so vorgegangen, dass das Steuergerät den Messwert eines stromab zum SCR-Katalysator angeordneten $NO_x$-Sensors und/ oder eines $NH_3$-Sensors und/ oder eines $N_2O$-Sensors aufsummiert oder aufintegriert und gleichzeitig überwacht, ob der wenigstens eine Betriebsparameter innerhalb eines Wertebereiches von wenigstens zwei Wertebereichen liegt, wobei die Wertebereiche durch in dem Steuergerät gespeicherte Größen bestimmt sind. Die Dauer der Addition oder Integration kann für eine vorgebbare Zeit t oder bis eine vorgebbare Emissionsmenge oder bis durch Aufsummieren oder Aufintegrieren mindestens eines Betriebsparameters ein vorgebbarer Wert erreicht ist, erfolgen. Dieser Betriebsparameter kann beispielsweise die Abgasmenge und/ oder die Kraftstoffmenge und/oder die Reduktionsmittelmenge und/oder die von der Brennkraftmaschine verrichtete Arbeit sein. Weiterhin kann zur Bestimmung der Dauer der Addition oder Integration auch der zur Überwachung der Wertebereiche bestimmte Betriebsparameter verwendet werden. Selbstverständlich ist zur Ermittlung der Soll- und Ist-Umsätze zusätzlich die Bestimmung der Rohemissionen notwendig.

Das Erreichen der Emissionsmenge kann dabei durch Aufsummieren oder Aufintegrieren von Konzentrationswerten und/ oder Emissionsmassen und/oder Emissionsmassenströmen ermittelt werden.

Durch das oben erwähnte Zuweisen von Wertebereichen innerhalb derer sich der wenigstens eine Betriebsparameter während des Aufsummierens oder Aufintegrierens bewegen darf, also durch eine Klassenbildung, wird die Häufigkeit, in der Ist-Emissionswerte oder Ist-Umsätze und damit Korrekturwerte für die Reduktionsmitteldosierung gewonnen werden können, drastisch erhöht. Dabei kann durch die Wahl der Wertebereiche innerhalb derer sich der wenigstens eine Betriebsparameter bewegen darf, der Fehler, der sich durch diese Klassenbildung ergibt, in einer vernachlässigbaren Größenordnung gehalten werden.

Verlässt der wenigstens eine Betriebsparameter den aktuellen Wertebereich, also die Klasse, während des Aufsummierens oder Aufintegrierens, ergeben sich zwei alternative Verfahrensführungen. Einerseits kann so vorgegangen werden, dass das Steuergerät beim Feststellen, dass der aktuelle Wertebereich verlassen wird, die aufsummierte oder aufintegrierte Summe verwirft. Andererseits kann beim Feststellen, dass der aktuelle Wertebereich verlassen wird, die aufsummierte oder aufintegrierte Summe vom Steuergerät zwischengespeichert werden, um dann wenn das Steuergerät ein Zurückkehren in den zuvor verlassenen Wertebereich feststellt, mit dem Aufsummieren oder Aufintegrieren fortzufahren bis eine vorgebbare Emissionsmenge, geleistete Arbeit oder Summe oder Integral eines weiteren Betriebsparameters erreicht oder die vorgebbare Zeit t zum Aufsummieren oder Aufintegrieren verstrichen ist.

Beide Alternativen haben Vor- und Nachteile. Im ersten Fall ist sichergestellt, dass das Aufsummieren oder Aufintegrieren in einem Zug erfolgt, also zwischen Anfang und Ende des Vorgangs nur Sekunden liegen. In solchen kurzen Zeiträumen kommen zeitlich bedingte Einflüsse oder Umwelteinflüsse nicht zum Tragen, haben also keine Auswirkung auf das Messergebnis für die Ist-Emission. Andererseits wird aber die Häufigkeit, in der neue Ist-Emissionsmesswerte zur Verfügung stehen, stark reduziert. Im zweiten Fall können, zumindest theoretisch, Tage oder sogar Wochen vergehen, bis eine Ist-Emissionsermittlung abgeschlossen ist, wodurch sich zeitlich bedingte Einflüsse oder Umwelteinflüsse sehr wohl auswirken und das Messergebnis verfälschen könnten. Dem kann man begegnen, indem man die Gültigkeit zwischengespeicherter Werte zeitlich begrenzt. Vorteilhaft ist bei der Verfahrensführung mit Zwischenspeicherung, dass die Häufigkeit, in der Ist-Emissionsmesswerte und damit aktuelle Korrekturwerte zur Verfügung stehen, stark erhöht wird.

Im weiteren Verfahrenszug benutzt das Steuergerät die über die vorgebbare Zeit t oder die vorgebbare Emissionsmenge, geleistete Arbeit oder Summe oder Integral eines weiteren Betriebsparameters aufsummierte oder aufintegrierte Summe oder eine dazu proportionale Größe als Ist-Emission für den Vergleich mit der gespeicherten Soll-Emission und ermittelt mit der festgestellten Differenz einen Korrekturwert für die Dosiermenge. Die jeweils aktuellen, für einen Wertebereich des wenigstens einen Betriebsparameters gültigen Korrekturwerte werden im Steuergerät vorgehalten, sodass das Steuergerät darauf zugreifen kann, um mit dem für den jeweiligen Wertebereich des wenigstens einen Betriebsparameter ermittelten Korrekturwert die Dosiermenge aus dem Modell zu modifizieren, wenn die aktuell durch das Steuergerät ermittelte Größe des wenigstens einen Betriebsparameters im entsprechenden Wertebereich liegt.

Das Modell zur Ermittlung der Dosiermenge lässt sich so effizient und damit vorteilhaft an zeitliche und umweltbedingte Änderungen anpassen.

Alternativ besteht die Möglichkeit, dass das Steuergerät, in Abhängigkeit von der durch das Steuergerät ermittelten aktuellen Größe des wenigstens einen Betriebsparameters, aus Korrekturwerten, die für zu dieser aktuellen Größe unmittelbar benachbarten Größen des wenigstens einen Betriebsparameters ermittelt wurden, durch Interpolation einen Zwischenwert als Korrekturwert ermittelt. Auf diese Weise lässt sich einerseits der durch die Klassenbildung bedingte Fehler in vorteilhafter Weise verkleinern, weil sich für jeden Betriebspunkt Zwischenwerte zu den gespeicherten Korrekturwerten bilden lassen, andererseits können Wertebereiche, für die noch kein Korrekturwert ermittelt wurde, durch Interpolation vorteilhaft überbrückt werden.

Eine besonders einfache und damit vorteilhafte Methode, aus dem Modell die Soll-Emission oder den Soll-Umsatz zu ermitteln, besteht darin, dass das Steuergerät in der vorgebbaren Zeit t oder bis eine vorgebbare Emissionsmenge oder geleistete Arbeit oder Summe oder Integral eines weiteren Betriebsparameters erreicht ist, also zeitlich parallel zur Ermittlung der Ist-Emission oder des Ist-Umsatzes, die aus dem Modell betriebspunktabhängig gewonnenen Werte für die Soll-Emission oder den Soll-Umsatz aufsummiert oder aufintegriert und die so gewonnene Summe oder eine dazu proportionale Größe als Soll-Emission oder Soll-Umsatz für den Vergleich der Ist-Emission oder des Ist-Umsatzes mit der Soll-Emission oder dem Soll-Umsatz verwendet.

Der wesentliche Vorteil bei dieser Vorgehensweise besteht darin, dass mit Ausnahme des Betriebsparameters, für den der Korrekturwert ermittelt werden soll und der sich deshalb nur in dem zugeordneten Wertebereich, also der Klasse bewegen darf, alle anderen Betriebsparameter beliebige Werte annehmen dürfen, weil sich die dadurch gegebenen Einflüsse durch das Aufsummieren bzw. Aufintegrieren der Ist-Emissionen und der Soll-Emissionen eliminieren. Oder anders gesagt, sowohl bei der Ermittlung der Ist-Emission oder des Ist-Umsatzes als auch bei der Ermittlung der Soll-Emission oder des Soll-Umsatzes werden die gleichen Betriebspunkte durchlaufen, so dass sich die dadurch gegebenen Einflüsse beim Vergleich beider Werte eliminieren und als Ergebnis nur die Abweichung bezogen auf den Betriebsparameter übrig bleibt, für den der Korrekturwert ermittelt werden soll.

Um die aus den Modellen bestimmte Dosiermenge mit dem Korrekturwert zu modifizieren, bildet das Steuergerät die Summe von Dosiermenge und Korrekturwert, wenn der Korrekturwert in Form einer positiven oder negativen Korrekturdosiermenge gespeichert ist oder das Produkt von Dosiermenge und Korrekturwert wenn der Korrekturwert als Faktor gespeichert ist.

Hinsichtlich der durch das Steuergerät ausgewertete Betriebsparameter der Brennkraftmaschine und/oder der Abgasnachbehandlungsanlage kommen die Kühlwassertemperatur und/oder die Öltemperatur und/oder die Kraftstofftemperatur und/oder der Kraftstoffeinspritzdruck und/oder die Sauglufttemperatur und/oder die Ladelufttemperatur und/oder die Turboladerdrehzahl und/oder der Ladedruck und/oder die Fahrgeschwindigkeit und/oder die Motordrehzahl und/oder die Kraftstoffeinspritzmenge und/oder die Abgastemperaturen und/oder die Katalysatortemperatur und/oder Reduktionsmitteleinspritzmenge und/oder die Abgasrückfiihrungsrate und/oder der Reduktionsmitteldruck und/oder die Emissionen und/oder das Kraftstoff-/Luftverhältnis und/oder die zeitliche Änderung dieser Größen in Frage.

Dies bedeutet für die Dosierung des Reduktionsmittels, dass, im einfachsten Fall, also dann, wenn nur ein Betriebsparameter, z.B. der Abgasmassenstrom, von dem Steuergerät ausgewertet wird, das im Steuergerät vorgehaltene Modell nur eine Kennlinie enthalten würde. Werden mehrere Betriebsparameter vom Steuergerät ausgewertet, handelt es sich um ein oder mehrere Kennlinienfelder oder ein oder mehrere mehrparametrige Funktion.

Aufgrund der zahlreichen Betriebsparameter, die einen Einfluss auf die Dosiermenge für das Reduktionsmittel haben können, ist es sinnvoll, dass das Steuergerät für unterschiedliche Betriebsparameter der Brennkraftmaschine und/oder der Abgasnachbehandlungsanlage unterschiedliche Korrekturwerte und/oder unterschiedliche Parameter wenigstens einer Korrekturfunktion und/oder mehrere Korrekturfunktionen bestimmt und speichert und dass das Steuergerät abhängig vom aktuellen Betriebspunkt der Brennkraftmaschine und/oder der Abgasnachbehandlungsanlage aus diesen Korrekturwerten und/ oder Korrekturfunktionen einen betriebspunktbezogenen Korrekturwert ermittelt.

Durch die vorstehend angesprochene multiple Abhängigkeit wird die Wichtigkeit der Klassenzuweisung der Betriebsparameter besonders deutlich, weil nur so mehrfach abhängige Korrekturwerte in einem akzeptablen Zeitraum überhaupt erst ermittelt werden können. Die Klassenbildung bewirkt, dass Betriebsparameterbereiche innerhalb jeweils definierter Grenzen als konstant angesehen werden, so dass sich in Folge ein Betriebspunktebereich ergibt, der als Quasi-Stationärbetrieb behandelt werden kann. Die Wahrscheinlichkeit, dass der reale Betriebspunkt, in dem sich die Brennkraftmaschine und/ oder das Abgasnachbehandlungssystem gerade befindet, lange genug in einem solchen als quasistationär angesehenen Betriebspunktebereich liegt, um den Korrekturwert zu ermitteln, nimmt durch die erwähnte Klassenbildung drastisch zu.

Als Sensoren zur Bestimmung der Ist-Emissionen, der Rohemissionen und der Ist-Umsätze können HNCO-Sensoren und/oder $N_2O$-Sensoren und/oder $NO_x$-Sensoren und/oder $NH_3$-Sensoren und/oder Lambdasensoren verwendet werden. Diese Sensoren sind im Handel erhältlich, ihr Aufbau bedarf daher keiner weiteren Erläuterung.

Nachfolgend wird die Erfindung anhand von Ausführungsbeispielen näher erläutert.

Für die nachfolgenden Ausführungen wird von einer Abgasnachbehandlungsanlage zur Dosierung eines ammoniakabspaltenden Reduktionsmittels in den Abgasstrom einer in einem Fahrzeug verbauten mit Luftüberschuss betriebenen Brennkraftmaschine ausgegangen.

Wie bereits eingangs aufgezeigt, reicht es für derartige Anlagen nicht aus, das Reduktionsmittel betriebspunktabhängig gesteuert zu dosieren, es ist vielmehr notwendig, abhängig von zeitlichen Veränderungen der Abgasnachbehandlungsanlage bzw. der Brennkraftmaschine sowie abhängig von Umwelteinflüssen die Dosiermenge zu korrigieren. Hierzu werden betriebspunktabhängige Korrekturwerte ermittelt.

Die Funktionsweise, um bezüglich des jeweiligen Betriebspunktes der Brennkraftmaschine und/ oder der Abgasnachbehandlungsanlage einen Korrekturwert zu ermitteln, soll nachfolgend beispielhaft aufgezeigt werden. Es wird dabei vorausgesetzt, dass die beschriebenen Abläufe in einem Steuergerät, z.B. einem programmierbaren, elektronischen Motorsteuergerät, wie es bei modernen Brennkraftmaschinen Anwendung findet, als programmierte Steuerungsabläufe realisiert sind. Das Steuergerät steht über eine Vielzahl von Sensoren mit der Brennkraftmaschine und der Abgasnachbehandlungsanlage in Verbindung und ermittelt über diese Sensoren alle aktuellen Werte von relevanten Betriebsparametern der Brennkraftmaschine bzw. der Abgasnachbehandlungsanlage, sowie die aktuelle Ist-Emission oder den aktuellen Ist-Umsatz der Abgasnachbehandlungsanlage. Die aktuellen Werte der relevanten Betriebsparameter definieren dabei den aktuellen Betriebspunkt der Brennkraftmaschine bzw. der Abgasnachbehandlungsanlage.

Zunächst erfolgt während des Betriebs der Brennkraftmaschine eine kontinuierliche Überwachung der relevanten Betriebsparameter. Dies dient einerseits dem Zweck, aus dem im Steuergerät gespeicherten Modell betriebspunktabhängig die Dosiermenge des Reduktionsmittels zu entnehmen, andererseits dient die Überwachung der Betriebsparameter dazu, in Abhängigkeit von Betriebsparameterwerten Korrekturwerte für die als Speicherwert betriebspunktabhängig vorgehaltene Reduktionsmittelmenge zu ermitteln. Auf diese Ermittlung der Korrekturwerte wird nachfolgend ausführlich eingegangen.

Wie bereits ausgeführt, erfolgt die Ermittlung der Korrekturwerte klassenbezogen. Darunter ist zu verstehen, dass die Werte, die die relevanten Betriebsparameter annehmen können, in Wertebereiche oder Klassen aufgeteilt sind. Für jeden relevanten Betriebsparameter sind wenigstens zwei Wertebereiche oder Klassen definiert. Wie viele Klassen für einen Betriebsparameter existieren, bzw. wie die Klassen beschaffen sind, also welchen Anfangswert und welchen Endwert sie haben, hängt davon ab, in welchen Wertebereichen des entsprechenden Betriebsparameters sich eine vernachlässigbare Änderung des Korrekturwertes ergibt. Die entsprechenden Wertebereiche wurden mit Hilfe einer Referenzanlage ermittelt. Bei der Referenzanlage handelt es sich, wie bereits ausgeführt, um eine Abgasnachbehandlungsanlage zur Dosierung eines ammoniakabspaltenden Reduktionsmittels in den Abgasstrom einer in einem Fahrzeug verbauten mit Luftüberschuss betriebenen Brennkraftmaschine, die dem Serienstand entspricht und an der die entsprechenden Messungen in Versuchen durchgeführt werden. Die so ermittelten Wertebereiche oder Klassen für jeden der relevanten Betriebsparameter werden in die Steuergeräte der Serie eingespeichert, so dass auf diese zurückgegriffen werden kann.

Beim Betrieb einer Anlage nach dem Serienstand und unter der Annahme, dass zunächst keine Korrekturwerte im Steuergerät gespeichert sind, z.B. bei der ersten Inbetriebnahme der Brennkraftmaschine, erfolgt die Dosierung unter Verwendung der im Modell vorgehaltenen Dosiermengen, also unkorrigiert. Gleichzeitig beginnt das Steuergerät damit, die aktuellen Werte der relevanten Betriebsparameter zyklisch abzufragen und mit den Wertebereichen oder Klassen zu vergleichen, die im Steuergerät gespeichert sind. In Abhängigkeit vom Ergebnis dieses Vergleiches ergeben sich zwei Möglichkeiten

- Der aktuelle Wert des Betriebsparameters bleibt innerhalb der Grenzen einer Klasse;
- Der aktuelle Wert des Betriebsparameters überschreitet die Klassengrenze.

Auf die beiden genannten Fälle wird unten näher eingegangen.

Zum vorgenannten Vorgang läuft parallel ein weiterer Vorgang ab. Dabei wird bezüglich der aktuellen Klasse bzw. Klassen in der sich der bzw. die Betriebsparameter befinden, der von einem Abgassensor gelieferte Wert oder der mit Hilfe dieses Sensors ermittelte Umsatz von dem Steuergerät aufsummiert oder aufintegriert. Für das Aufsummieren oder Aufintegrieren ist im Steuergerät eine Zeit t, eine Emissionsmenge, eine von der Brennkraftmaschine geleistete Arbeit oder die Summe oder das Integral eines weiteren Betriebsparameters vorgebbar, nach deren Ablauf, unter der Voraussetzung, dass bis deren Ablauf, die Klasse bzw. die Klassen nicht verlassen wurden, das Steuergerät den Summier- oder Integriervorgang abschließt und den so gewonnenen Wert als Äquivalent zur Ist-Emission oder zum Ist-Umsatz der Anlage für einen Ist-Wert-Soll-Wert-Vergleich benutzt.

Die vorgebbare Zeit t sollte dabei mindestens 15 Sekunden betragen. Für den Fall, dass an Stelle der Zeit t eine vorgebbare Emissionenmenge als Abbruchkriterium dient, kann die Emissionsmenge, wie bereits erwähnt, durch Aufsummieren oder Aufintegrieren von Konzentrationswerten und/ oder Emissionsmassen und/ oder Emissionsmassenströmen ermittelt werden.

Wird die vorgebbare Emissionenmenge in Masseneinheiten durch Aufsummieren oder Aufintegrieren von Emissionsmassen und/ oder Emissionsmassenströmen angegeben, so sollte die vorgebbare Emissionsmenge für $NO_x$ mindestens 1 mg und/ oder die vorgebbare Emissionsmenge für $NH_3$ mindestens 0,01mg und/ oder die vorgebbare Emissionsmenge für $N_2O$ mindestens 0,02mg und/ oder die vorgebbare Emissionsmenge für HNCO mindestens 0,01mg betragen.

Der Wert für die Soll-Emission oder den Soll-Umsatz kann dadurch ermittelt werden, dass auf Speicherwerte zurückgegriffen wird, die den von dem Steuergerät ermittelten Ist-Emissonswerten analog sind, jedoch durch theoretische Überlegungen und/ oder durch Versuche mit Hilfe der Referenzbrennkraftmaschine in einem vorgelagerten Vorgang ermittelt wurden und geknüpft an die im Speicher des Steuergerätes gespeicherten Dosiermengen ebenfalls dort eingespeichert sind. Solche Speicherwerte können, analog zum Aufsummieren oder Aufintegrieren des Wertes für die Ist-Emission oder den Ist-Umsatz, ebenfalls über die vorgebbare Zeit t oder alternativ bis zum Erreichen der vorgebbaren Emissionsmenge, einer geleisteten Arbeit oder der Summe oder dem Integral eines weiteren Betriebsparameters aufsummiert oder aufintegriert werden, so dass der so gewonnene Wert der Soll-Emission proportional ist.

Überschreitet der aktuelle Wert des Betriebsparameters bzw. der Betriebsparameter die Klassengrenze, wie es oben als zweite Möglichkeit angesprochen ist, bestehen ebenfalls wieder zwei Möglichkeiten der Weiterbehandlung. Einerseits kann die bereits gewonnene Teilsumme bzw. das Teilintegral verworfen werden, so dass kein oder kein neuer Korrekturwert gebildet wir. Andererseits besteht die Möglichkeit, beim Überschreiten der Klassengrenze den Summier- oder Integriervorgang zu unterbrechen und bei Rückkehr in die Klasse an der unterbrochenen Stelle wieder aufzunehmen. Die vorgebbare Zeit t bzw. alternativ die vorgebbare Emissionsmenge, die vorgebbare geleistete Arbeit oder eine vorgegebene Summe oder ein Integral eines weiteren Betriebsparameters, die für den Summier- bzw. Integriervorgang vorgesehen ist, wird so in Teil-Zeiten $t_x$ bzw. Teil-Emissionsmengen, Teil-Arbeiten oder Teil-Summen oder Teil-Integrale eines weiteren Betriebsparameters unterteilt.

Welche Betriebsparameter (z.B. Öl-, Abgas-, Motorwasser- und Außentemperatur usw.) bei der Ermittlung der Ist-Emission zu berücksichtigen sind, hängt von den jeweiligen Gegebenheiten ab. In der Praxis werden von den weiter oben aufgeführten theoretisch möglichen nur einige wenige zu berücksichtigen sein.

Ist die Abweichung zwischen der Soll- und der Ist-Emission bzw. dem Soll- und dem Ist-Umsatz ermittelt, kann daraus ein Korrekturwert bestimmt und dieser, verknüpft mit der jeweiligen Betriebsparameter-Klasse bzw. den Betriebsparameter-Klassen im Speicher des Steuergerätes abgespeichert werden.

Liegen nun im Steuergerät Korrekturwerte vor, so wird die Dosiermenge abhängig von diesen auf die Betriebsparameter-Klassen bezogenen Korrekturwerten, korrigiert. Dies geschieht, indem das Steuergerät die im Rahmen des in ihr gespeicherten Modells vorgehaltene, in Abhängigkeit vom aktuellen Betriebspunkt aus dem Speicher abgerufene Dosiermenge mit dem, bzw. mit den Korrekturwerten verknüpft.

Zu den vorstehenden Ausführungen lassen sich folgende allgemeine Aussagen formulieren:

Für $n$ Betriebsparameter, nachfolgend als Einflussparameter $E$ bezeichnet, müssen mindestens $2 n$ Korrekturwerte und/oder mindestens eine Korrekturfunktion $k_f$ mit $n$- Parametern bestimmt werden.

Die tatsächlich zugegebene Reduktionsmittelmenge $m_{Reduktionsmittel}$ zum Zeitpunkt $t$ ergibt sich dann aus einer aus abgespeicherten Daten, in Form von Kurven, Kennfeldern, Tabellen oder Funktionen, ermittelten Reduktionsmittelmenge $m_{Reduktionsmittel,Modell}$ und mindestens einem, mit wenigstens einem Einflussparameter $E$ verknüpften Korrekturwert $K$. Dieser Korrekturwert ist abhängig vom aktuellen Wert des Einflussparameters $E$ und dem zum Zeitpunkt $t'$ bestimmten und mit dem Einflussparameter $E$ verknüpften Korrekturwert $k_f$, wobei der Korrektuwert $k_f$, wie vorstehend beschrieben, klassenbezogen ermittelt wurde.

Allgemein kann man schreiben:

$$m_{Reduktionsmittel}(t)=K(E(t),\ k_f(t'))\bullet m_{Reduktionsmittel,Modell}$$

wobei $t$ die aktuelle Zeit und $t'$ eine Zeit in der Vergangenheit beschreibt.

Neben Multiplikation ist selbstverständlich auch eine Addition gemäß

$$m_{Reduktionsmittel}(t)=K(E(t),k_f(t'))+m_{Reduktionsmittel,Modell}$$

möglich.

Zur Ermittlung der Auswirkung unterschiedlicher Werte des Einflussparameters ist die Abweichung von Soll- und Ist-Emissionen, bzw. Soll- und Ist-Umsätzen bei mindestens zwei unterschiedlichen Wertebereichen für den Einflussparameter *E* und damit zu zwei unterschiedlichen Zeitpunkten in der Vergangenheit zu ermitteln.

Hierzu ein Beispiel: Zunächst werden in einem vorgelagerten Vorgang die Betriebsparameter wie vorstehend beschrieben klassiert, die Korrekturwerte für jede Klasse werden dann durch Aufintegration oder Addition Ist-Werte innerhalb der Klassen und dem Vergleich mit dem Soll-Wert ermittelt. Hierbei ist eine bestimmte Messzeit t vorzugeben, die notwendig ist einen Korrekturwert sicher zu ermitteln.

Beispielhaft ist das Verfahren der Betriebsparameter- Klassen oder Einflussparameter- Klassen nachfolgend am Beispiel des Einflussparameters "Abgasmassenstrom" dargestellt.

Beim Istwert-Sollwert-Vergleich während des Betriebs wird

- bei 100 - 1000kg/h ein Korrekturwert von 120% zum Zeitpunkt t' ermittelt.

- bei 1001 - 2000kg/h ergibt sich ein Korrekturwert von 90% zum Zeitpunkt t".

- bei 2001 - 3000kg/h ergibt sich ein Korrekturwert von 130% zum Zeitpunkt t"'.

Die so ermittelten Korrekturwerte werden in Form einer Kennlinie aufgetragen und den Abgasmassenstrom-Klassen 100 - 1000kg/h, 1000 - 2000kg/h und 2000 - 3000kg/h zugeordnet:

| Abgasmassenstrom-Klassen [kg/h] | 100-1000 | 1001-2000 | 2001-3000 |
|---|---|---|---|
| Korrekturwert [%] | 120 | 90 | 130 |

Der Korrekturwert ist damit an eine Klasse einer Einflussgröße geknüpft und nicht mehr an einen einzelnen Wert einer Einflussgröße.

Während des instationären Motorbetriebs kann der ermittelte Korrekturwert dann anschließend entweder für die gesamte Breite der Klasse gelten, oder jeweils nur für einen Wert der Klasse, beispielweise untere Grenze, Mitte oder obere Grenze, wobei der aktuelle Korrekturwert dann,vorteilhaft durch lineare Interpolation aus der Kennlinie ermittelt und zur Anpassung der gesteuerten Dosiermenge verwendet wird. Für den ersten Fall ergäbe sich für einen Massenstrom zwischen 1001 und 2000kg/h ein konstanter Korrekturwert von 90% um den die aus den Modellen ermittelte Dosiermenge durch Multiplikation mit dem Korrekturwert korrigiert würde, ab 2001kg/h würde mit 130% korrigiert werden. Im anderen Fall ergäbe sich für einen Abgasmassenstrom von 1800kg/h mit lineare Interpolation, unter der Annahme das der Korrekturwert jeweils auf die Mitte der beiden nächstgelegenen Korrekturklassen bezogen ist, ein Korrekturwert von 102%

Die Korrekturwerte können, wie oben beschrieben, in Form von relativen Werten oder in Form von Absolutwerten, wie z. B. geänderten Reduktionsmittelmengen, bestimmt und abgelegt werden. Das nachfolgende Beispiel soll den Unterschied verdeutlichen, wobei der Einfachheit halber sowohl für die relativen, wie auch für die absoluten Korrekturwerte die Abweichungen direkt als Korrekturwerte übernommen werden. In der Realität bietet es sich allerdings an, die Maximalwerte und/oder die pro Überprüfung erlaubte Veränderung der Korrekturwerte zu begrenzen, um ein Aufschwingen des Systems zu verhindern.

Wie bereits weiter oben beschrieben, sollen die relativen Korrekturwerte für die Einflussgröße Abgasmassenstrom bestimmt werden, wobei als Bewertungskriterium der $NO_x$-Umsatz herangezogen wird.

| Abgasmassenstrom-Klassen[kg/h] | 100-1000 | 1001-2000 | 2001-3000 |
|---|---|---|---|
| Soll-NOx-Umsatz [%] | 90 | 80 | 65 |
| Ist-NOx-Umsatz [%] | 75 | 89 | 46,2 |
| Korrekturwert [%] | 120 | 90 | 130 |

Werden Absolutwerte verwendet, bietet sich bei der Verwendung von $NO_x$-Sensoren an, als Bewertungskriterium die $NO_x$-Konzentrationen stromab des SCR-Systems zu verwenden.

| Abgasmassenstrom-Klassen[kg/h] | 100-1000 | 1001-2000 | 2001-3000 |
|---|---|---|---|
| Soll-NOx-Konzentration [ppm] | 800 | 1200 | 650 |
| Ist-NOx-Konzentration [ppm] | 650 | 1400 | 650 |
| Korrekturwert [ppm] | 150 | -200 | 0 |

Bei der Ermittlung der Redutionsmittelmenge $m_{Reduktionsmittel}(t)$ zu einem späteren Zeitpunkt ist bei der Verwendung von absoluten Korrekturwerten $k_f$ darauf zu achten, dass die Korrekturwerte Reduktionsmitteldosiermengen wiedergeben müssen. D.h. im obigen Beispiel muss der aus den Korrekturwerten ermittelte Konzentrationswert mit Hilfe der aktuellen Abgasmenge in einen aktuellen Reduktionsmitteldosiermengenaufschlag umgerechnet werden. Dies kann vermieden werden, wenn als Korrekturwerte keine Abgaskonzentrationen sondern bereits Reduktionsmittelmengen abgelegt werden.

Analog zu den obigen Beispielen zur Ermittlung von absoluten und relativen Korrekturwerten kann bei der Ermittlung der Korrekturwerte für die anderen Einflussparameter wie der Kühlwassertemperatur und/oder der Öltemperatur und/oder der Kraftstofftemperatur und/oder dem Abgasmassenstrom und/oder dem Kraftstoffeinspritzdruck und/oder der Sauglufttemperatur und/oder der Ladelufttemperatur und/oder der Turboladerdrehzahl und/oder dem Ladedruck und/oder der Fahrgeschwindigkeit und/oder der Motordrehzahl und/oder der Kraftstoffeinspritzmenge und/oder den Abgastemperaturen und/oder der Katalysatortemperatur und/oder der Reduktionsmitteleinspritzmenge und/oder der Abgasrückführungsrate und/oder dem Reduktionsmitteldruck und/oder der $NO_X$-Rohemission und/oder den Betriebsstunden und/oder der Luftfeuchte und/oder dem Atmosphärendruck verfahren werden.

Ergeben sich $n$ Einflussparameter $E_1$ bis $E_n$, so kann für $n$ Korrekturwerte die tatsächlich zugegebene Dosiermenge beispielsweise durch Multiplikation

$$m_{Reduktionsmittel}(t) = K_1(E_1(t), k_{f1}(t')) \bullet K_2(E_2(t), k_{f2}(t'')) \bullet K_3(E_3(t), k_{f3}(t''')) \bullet ...$$

$$K_n(E_n(t), k_{fn}(t'''')) \bullet m_{Reduktionsmittel, Modell}$$

oder Addition

$$m_{Reduktionsmittel}(t) = (\, K_1(E_1(t), k_{f1}(t')) + K_2(E_2(t), k_{f2}(t'')) + K_3(E_3(t), k_{f3}(t''')) + ...$$

$$K_n(E_n(t), k_{fn}(t'''))) + m_{Reduktionsmittel, Modell}$$

der Korrekturwerte bestimmt werden.

Die Addition der Korrekturwerte findet meist dann Anwendung, wenn es sich bei den Korrekturwerten um Absolutwerte handelt, die Multiplikation, wenn die Korrekturwerte Relativwerte enthalten.

Auch das Aufstellen einer mehrparametrigen Korrekturfunktion $K$, in der die Einflussparameter $E$ enthalten sind, ist denkbar:

$$m_{Reduktionsmittel}(t) = K(E_1(t), k_{f1}(t'), E_2(t), k_{f2}(t''), E_3(t), k_{f3}(t''') + ...$$

$$E_n(t), k_{fn}(t'''')) \bullet m_{Reduktionsmittel, Modell}$$

Die einzelnen Korrekturwerte für die Einflussparameter können, müssen aber nicht zu unterschiedlichen Zeiten $t'$, $t''$, $t'''$ usw. bestimmt worden sein.

Die Korrekturwerte werden so lange eingefroren, d. h. unverändert gespeichert und zur Korrektur der abgespeicherten Werte und damit der Steuerung weiter verwendet, bis wieder eine Rückkehr in die jeweiligen Betriebsparameter-Klasse erreicht und/oder eine neue Integration oder Aufsummierung abgeschlossen ist, wodurch eine erneute Überprüfung der Emissionen durchgeführt und neue Korrekturwerte ermittelt werden können.

In den vorangegangenen Beispielen wurde die Abweichung des Soll- vom Ist-Wert eins zu eins als Korrekturwert übernommen. Dies ist nicht immer zielführend. Bei großen Abweichungen resultieren daraus große Korrekturwerte, was zu einem Aufschwingen des Systems führen kann. Daher ist es sinnvoll, die Änderung der Korrekturwerte pro Überprüfungsschritt zu begrenzen. Dies kann durch die Vorgabe einer maximal erlaubten Korrekturwertänderung pro Überprüfungsschritt und/oder durch die Vorgabe eines minimalen und/oder maximalen Korrekturwertes erreicht werden. Eine weitere Möglichkeit besteht darin, den Korrekturwert durch Multiplikation der Abweichung mit einem Wert, der zwischen Null und Eins liegt, zu ermitteln.

Bei der Ermittlung mehrerer Korrekturwerte für mehrere Betriebs- oder Einflussparameter ist zu beachten, dass die unterschiedlichen Einflussparameter einen unterschiedlich starken Einfluss auf die Ist-Emissionen oder Ist-Umsätze haben. Daher ist es sinnvoll, den Einfluss der einzelnen einflussparameterabhängigen Faktoren, die zur Korrektur der Dosiermenge führen, durch Wichtungsfaktoren $w_1$, $w_2$, $w_3$, ...$w_n$ für die einzelnen Korrekturwerte zu realisieren. Dies führt beispielsweise zu folgendem Ansatz:

$$m_{Reduktionsmittel}(t) = (w_1 \bullet K_1(E_1(t), k_{f1}(t')) + w_2 \bullet K_2(E_2(t), k_{f2}(t'')) +$$

$$w_3 \bullet K_3(E_3(t), k_{f3}(t''')) + ... \, w_n \bullet K_n(E_n(t), k_{fn}(t'''))) \bullet m_{Reduktionsmittel,Modell}(t)$$

Vor allem bei der Ermittlung der Dosiermenge über Multiplikation und/oder Aufstellen einer mehrparametrigen Korrekturfunktion ist es auch denkbar, den Einfluss der unterschiedlichen Einflussparameter bereits bei der Ermittlung der einzelnen Korrekturwerte vorzunehmen, so dass sich für Parameter mit geringerem Einfluss kleinere Korrekturwerte ergeben, als für Parameter mit großem Einfluss. Zudem ist es auch denkbar, für unterschiedliche Einflussparameter unterschiedliche maximal erlaubte Korrekturwertänderung pro Überprüfungsschritt und/oder unterschiedliche minimale und/oder maximale Korrekturwerte einzuführen. Eine weitere Möglichkeit besteht darin, die unterschiedlichen Korrekturwerte durch Multiplikation mit unterschiedlichen Wichtungsfaktoren, die zwischen Null und Eins liegen und dadurch den Einfluss des jeweiligen Einflussparameters repräsentieren, zu ermitteln. Die Wichtungsfaktoren können im einfachsten Fall als Konstanten definiert sein. Eine weitere Möglichkeit besteht darin, dass die Wichtungsfaktoren mit Hilfe einer Funktion und/oder eines Kennfelds und/oder einer Kennlinie ermittelt werden, die zusätzlich von der Größe mindestens eines Betriebs- oder Einflussparameters und/oder der Abweichung zwischen Soll- und Ist-Emissionen/Umsätzen abhängig sind. Da sich der Einfluss eines Einflussparameters im Laufe des Betriebs, z.B. durch Alterung der Katalysatoren, verändern kann, ist es zudem denkbar, die Wichtungsfaktoren über die Laufzeit anzupassen. Dies kann z.B. dadurch erfolgen, dass der Wichtungsfaktor abhängig von der Anzahl der Änderungen des zugehörigen Korrekturwertes und/oder der Größe der Änderung des Korrekturwertes gemacht wird. Zudem ist es möglich, die Wichtung der Korrekturwerte und/oder die Ermittlung der Korrekturwerte in Abhängigkeit von mindestens einem Einflussparameter mit Hilfe mindestens eines neuronalen Netzes vorzunehmen.

**Patentansprüche**

1. Verfahren zur Anwendung in Verbindung mit einer Abgasnachbehandlungsanlage zur Dosierung eines ammoniakabspaltenden Reduktionsmittels in den Abgasstrom einer in einem Fahrzeug verbauten mit Luftüberschuss betriebenen Brennkraftmaschine, wobei

- die Dosierung des Reduktionsmittels mittels einer, von einem Steuergerät gesteuerten, der Abgasnachbehandlungsanlage zugeordneten Dosiereinrichtung in den Abgasstrom erfolgt,
- stromab zur Dosiereinrichtung im Abgasstrom, als weiterer Teil der Abgasnachbehandlungsanlage, wenigstens ein SCR-Katalysator angeordnet ist,
- die Dosiermenge von dem Steuergerät mittels eines in diesem gespeicherten, alle möglichen Betriebspunkte der Brennkraftmaschine und/ oder der Abgasnachbehandlungsanlage abdeckenden Models, in Abhängigkeit von wenigstens einem durch das Steuergerät ausgewerteten Betriebsparameters der Brennkraftmaschine und/ oder der Abgasnachbehandlungsanlage ermittelt wird, wobei der jeweilige Augenblickswert des wenigstens einen Betriebsparameters den jeweiligen Betriebspunkt der Brennkraftmaschine und/oder der Abgasnachbehandlungsanlage bestimmt,
- während des Betriebs der Brennkraftmaschine, das Steuergerät durch Vergleich einer für den jeweiligen Betriebspunkt der Brennkraftmaschine und/oder der Abgasnachbehandlungsanlage mittels des Steuergerätes der Bennkraftmaschine aus Speicherwerten ermittelten, der Soll-Emission oder dem Soll-Umsatz proportionalen Größe, mit einer messtechnisch vom Steuergerät erfassten der Ist-Emission oder dem Ist-Umsatz proportionalen Größe, eine Abweichung ermittelt und in Abhängigkeit von dieser Abweichung einen Korrekturwert für die Dosiermenge ermittelt, und für nachfolgende Dosiervorgänge das gespeicherte Modell mit diesem Korrekturwert modifiziert,
- das so modifizierte Modell solange vom Steuergerät zur Dosierung herangezogen wird, bis das Steuergerät durch Vergleich einer für den jeweiligen Betriebspunkt der Brennkraftmaschine und/oder der Abgasnachbehandlungsanlage im Steuergerät der Bennkraftmaschine gespeicherten, der Soll-Emission oder dem Soll-Umsatz proportionalen Größe, mit einer messtechnisch vom Steuergerät erneut erfassten, der Ist-Emission oder dem Ist-Umsatz proportionalen Größe, eine Abweichung ermittelt und in Abhängigkeit von dieser Abweichung einen neuen Korrekturwert für die Dosiermenge ermittelt, und für nachfolgende Dosiervorgänge das gespeicherte Modell mit diesem neuen Korrekturwert modifiziert,

- die Ermittlung der Ist-Emission oder des Ist-Umsatzes so erfolgt, dass das Steuergerät den Messwert eines stromab zum SCR-Katalysator angeordneten $NO_X$-Sensors und/ oder eines $NH_3$-Sensors und/ oder eines $N_2O$-Sensors und/ oder eines HNCO-Sensors und/ oder eines Lambdasensors oder den, mit Hilfe wenigstens eines dieser Sensoren und der Rohemission vor dem SCR-Katalysator ermittelten Ist-Umsatz, für eine vorgebbare Zeit t oder bis zum Erreichen einer vorgebbaren Emissionsmenge oder bis durch Aufsummieren oder Aufintegrieren mindestens eines Betriebsparameters ein vorgebbarer Wert erreicht ist, aufsummiert oder aufintegriert und gleichzeitig überwacht, ob der wenigstens eine Betriebsparameter innerhalb eines Wertebereiches von wenigstens zwei Wertebereichen liegt, wobei die Wertebereiche durch in dem Steuergerät gespeicherte Größen bestimmt sind,

- das Steuergerät dann, wenn es ein Verlassen des aktuellen Wertebereiches während des Aufsummierens oder Aufintegrierens feststellt, die aufsummierte oder aufintegrierte Summe verwirft, oder dass das Steuergerät dann, wenn es eine Verlassen des aktuellen Wertebereiches während des Aufsummierens oder Aufintegrierens feststellt, die aufsummierte oder aufintegrierte Summe zwischenspeichert und dann wenn das Steuergerät ein Zurückkehren in den zuvor verlassenen Wertebereich feststellt, mit dem Aufsummieren oder Aufintegrieren fortfährt bis die vorgebbare Zeit t zum Aufsummieren oder Aufintegrieren verstrichen oder bis eine vorgebbare Emissionsmenge oder durch Aufsummieren oder Aufintegrieren mindestens eines Betriebsparameters ein vorgebbarer Wert erreicht ist,

- das Steuergerät die über die vorgebbare Zeit t oder die vorgebbare Emissionsmenge oder vorgebbare Arbeit aufsummierte oder aufintegrierte Summe oder eine dazu proportionale Größe als Ist-Emission oder Ist-Umsatz für den Vergleich mit der aus Speicherwerten ermittelten Soll-Emission oder dem Soll-Umsatz heranzieht und einen Korrekturwert für die Dosiermenge ermittelt,

- das Steuergerät mit dem für den jeweiligen Wertebereich des wenigstens einen Betriebsparameters ermittelten Korrekturwert die Dosiermenge aus dem Modell modifiziert, wenn die aktuell durch das Steuergerät ermittelte Größe des wenigstens einen Betriebsparameters in diesem Wertebereich liegt, oder dass das Steuergerät in Abhängigkeit von der durch das Steuergerät ermittelten aktuellen Größe des wenigstens einen Betriebsparameters aus Korrekturwerten die für zu dieser aktuellen Größe unmittelbar benachbarten Größen des wenigstens einen Betriebsparameters ermittelt wurden durch Interpolation einen Korrekturwert ermittelt und mit diesem Korrekturwert die Dosiermenge aus dem Modell modifiziert.

2. Verfahren nach Anspruch 1, **dadurch gekennzeichnet, dass** zeitlich parallel zur Ermittlung der Ist-Emission oder des Ist-Umsatzes das Steuergerät die Soll-Emission oder den Soll-Umsatz dadurch ermittelt, dass für die durchlaufenen Betriebspunkte der Brennkraftmaschine und/ oder der Abgasnachbehandlungsanlage die jeweils zu den Betriebspunkten im Steuergerät gespeicherten Ideal-Emissionswerte oder Idealumsätze in der vorgebbaren Zeit t oder bis zum Erreichen einer vorgebbaren Emissionsmenge oder bis durch Aufsummieren oder Aufintegrieren mindestens eines Betriebsparameters ein vorgebbarer Wert erreicht wird, vom Steuergerät aufsummiert oder aufintegriert werden und das Steuergerät die so gewonnene Summe oder eine dazu proportionale Größe als Soll-Emission oder Soll-Umsatz für den Vergleich der Ist-Emission oder des Ist-Umsatzes mit der Soll-Emission oder dem Soll-Umsatz verwendet.

3. Verfahren nach einem der Ansprüche 1-3, **dadurch gekennzeichnet, dass** die aus den Modellen bestimmte Dosiermenge vom Steuergerät mit dem Korrekturwert durch Multiplikation oder Addition verknüpft wird.

4. Verfahren nach einem der Ansprüche 1-4, **dadurch gekennzeichnet, dass** der wenigstens eine durch das Steuergerät ausgewertete Betriebsparameter der Brennkraftmaschine und/oder der Abgasnachbehandlungsanlage die Kühlwassertemperatur und/oder die Öltemperatur und/oder die Kraftstofftemperatur und/oder der Kraftstoffeinspritzdruck und/oder die Sauglufttemperatur und/oder die Ladelufttemperatur und/oder die Turboladerdrehzahl und/oder der Ladedruck und/oder die Fahrgeschwindigkeit und/oder die Motordrehzahl und/oder die Kraftstoffeinspritzmenge und/oder die Abgastemperaturen und/oder die Katalysatortemperatur und/oder Reduktionsmitteleinspritzmenge und/oder die Abgasrückführungsrate und/oder der Reduktionsmitteldruck und/oder die Emissionen und/oder das Kraftstoff-/Luftverhältnis und/oder die zeitliche Änderung dieser Größen ist.

5. Verfahren nach einem der vorhergehenden Ansprüche, **dadurch gekennzeichnet, dass** das Steuergerät für unterschiedliche Betriebsparameter der Brennkraftmaschine und/oder der Abgasnachbehandlungsanlage unterschiedliche Korrekturwerte und/oder unterschiedliche Parameter wenigstens einer Korrekturfunktion und/oder mehrere Korrekturfunktionen bestimmt und speichert und dass das Steuergerät abhängig vom aktuellen Betriebspunkt der Brennkraftmaschine und/oder der Abgasnachbehandlungsanlage aus diesen Korrekturwerten und/ oder Korrekturfunktionen einen betriebspunktbezogenen Korrekturwert ermittelt.

**6.** Verfahren nach einem der vorangegangenen Ansprüche, **dadurch gekennzeichnet, dass** die vorgebbare Zeit t wenigstens 15 Sekunden beträgt.

**7.** Verfahren nach einem der vorangegangenen Ansprüche, **dadurch gekennzeichnet, dass** die vorgebbare Emissionenmenge durch Aufsummieren oder Aufintegrieren von Konzentrationswerten und/oder Emissionsmassen und/oder Emissionsmassenströmen ermittelt wird.

**8.** Verfahren nach einem der vorangegangenen Ansprüche, **dadurch gekennzeichnet, dass** die vorgebbare Emissionsmenge in Masseneinheiten gespeichert ist und dass das Erreichen der vorgebbaren Emissionsmenge durch Aufsummieren oder Aufintegrieren von Emissionsmassen und/ oder Emissionsmassenströmen bewerkstelligt wird, wobei die vorgebbare Emissionsmenge für $NO_x$ wenigstens 1mg und/ oder die vorgebbare Emissionsmenge für $NH_3$ wenigstens 0,01mg und/ oder die vorgebbare Emissionsmenge für $N_2O$ wenigstens 0,02mg und/ oder die vorgebbare Emissionsmenge für HNCO wenigstens 0,01mg beträgt.

**9.** Verfahren nach einem der vorangegangenen Ansprüche, **dadurch gekennzeichnet, dass** die zur Bestimmung der Dauer der Aufintegration oder Aufsummation der Soll- und Ist-Werte verwendeten Betriebsparameter mit den Betriebsparametern identisch sind, deren Wertebereiche überprüft bzw. die zur Ermittlung des Korrekturwertes herangezogen werden.

**10.** Verfahren nach einem der vorangegangenen Ansprüche, **dadurch gekennzeichnet, dass** sich die zur Bestimmung der Dauer der Aufintegration oder Aufsummation der Soll- und Ist-Werte verwendeten Betriebsparameter von den Betriebsparametern unterscheiden, deren Wertebereiche überprüft bzw. die zur Ermittlung des Korrekturwertes herangezogen werden.

**11.** Verfahren nach einem der vorangegangenen Ansprüche, **dadurch gekennzeichnet, dass** es sich bei den zur Bestimmung der Dauer der Aufintegration oder Aufsummation der Soll- und Ist-Werte verwendeten Betriebsparameter um die Abgasmenge und/oder die Kraftstoffmenge und/oder die Reduktionsmittelmenge und/oder die von der Brennkraftmaschine geleistete Arbeit handelt.

**Claims**

**1.** A method for use in conjunction with an exhaust aftertreatment system for dosing a reducing agent which splits off ammonia into the exhaust stream of an internal combustion engine, installed in a vehicle, which is operated with excess air, wherein

- the dosing of the reducing agent takes place by means of a dosing means controlled by a control unit and associated with the exhaust aftertreatment system into the exhaust stream,
- at least one SCR catalyst is arranged downstream from the dosing means in the exhaust stream, as a further part of the exhaust aftertreatment system,
- the dosing amount is determined by the control unit by means of a model stored therein which covers all possible operating points of the internal combustion engine and/or of the exhaust aftertreatment system, dependent on at least one operating parameter of the internal combustion engine and/or of the exhaust aftertreatment system evaluated by the control unit, the respective momentary value of the at least one operating parameter determining the respective operating point of the internal combustion engine and/or of the exhaust aftertreatment system,
- during the operation of the internal combustion engine, the control unit determines a deviation by comparison of a variable, proportional to the desired emission or the desired conversion, determined for the respective operating point of the internal combustion engine and/or of the exhaust aftertreatment system by means of the control unit of the internal combustion engine from stored values, with a variable detected by measurement by the control unit which is proportional to the actual emission or the actual conversion, and determines a correction value for the dosing amount dependent on this deviation, and for subsequent dosing operations modifies the stored model with this correction value,
- the model thus modified is used by the control unit for dosing until the control unit, by comparison of a variable stored for the respective operating point of the internal combustion engine and/or of the exhaust aftertreatment system in the control unit of the internal combustion engine which is proportional to the desired emission or the desired conversion with a variable again detected by measurement by the control unit which is proportional to the actual emission or the actual conversion, determines a deviation and determines a new correction value for the dosing amount dependent on this deviation, and for subsequent dosing operations modifies the stored model with this new correction value,

- the determination of the actual emission or the actual conversion takes place such that the control unit adds up or integrates the measured value of an $NO_x$ sensor and/or of an $NH_3$ sensor and/or of an $N_2O$ sensor and/or of an HNCO sensor and/or of a lambda sensor arranged downstream of the SCR catalyst or the actual conversion determined before the SCR catalyst with the aid of at least one of these sensors and the untreated emission, for a pre-settable time t or until a pre-settable amount of emission is reached or until a pre-settable value is reached by adding-up or integrating at least one operating parameter, and at the same time monitors whether the at least one operating parameter lies within one value range of at least two value ranges, the value ranges being determined by variables stored in the control unit,

- the control unit, when it establishes that the current value range has been left during the adding-up or integration, discards the added-up or integrated sum, or that [sic] the control unit, when it establishes that the current value range has been left during the adding-up or integration, temporarily stores the added-up or integrated sum and then when the control unit establishes a return to the value range previously left, continues with the adding-up or integration until the pre-settable time t for adding up or integration has passed or until a pre-settable amount of emission or, by adding-up or integrating at least one operating parameter, a pre-settable value is reached,

- the control unit uses the sum added up or integrated over the pre-settable time t
or the pre-settable amount of emission or pre-settable work, or a variable proportional thereto as actual emission or actual conversion for the comparison with the desired emission or the desired conversion determined from stored values, and determines a correction value for the dosing amount,

- the control unit, with the correction value determined for the respective value range of the at least one operating parameter, modifies the dosing amount from the model if the value currently determined by the control unit of the at least one operating parameter lies in this value range, or that [sic] the control unit, dependent on the current value, determined by the control unit, of the at least one operating parameter, from correction values which had been determined for values of the at least one operating parameter directly neighbouring to this current value, determines a correction value by interpolation, and with this correction value modifies the dosing amount from the model.

2. A method according to Claim 1, **characterised in that** timewise in parallel with the determination of the actual emission or the actual conversion the control unit determines the desired emission or the desired conversion **in that** for the operating points of the internal combustion engine and/or of the exhaust aftertreatment system which are passed through the ideal emission values or ideal conversions stored in each case in the control unit for the operating points, in the pre-settable time t or until a pre-settable amount of emission is reached or until a pre-settable value is reached by adding-up or integration of at least one operating parameter, are added up or integrated by the control unit, and the control unit uses the sum thus obtained or a variable proportional thereto as desired emission or desired conversion for the comparison of the actual emission or the actual conversion with the desired emission or the desired conversion.

3. A method according to one of Claims 1-3, **characterised in that** the dosing amount determined from the models is linked by the control unit to the correction value by multiplication or addition.

4. A method according to one of Claims 1-4, **characterised in that** the at least one operating parameter of the internal combustion engine and/or of the exhaust aftertreatment system which is evaluated by the control unit is the coolant temperature and/or the oil temperature and/or the fuel temperature and/or the fuel-injection pressure and/or the suction-air temperature and/or the charge-air temperature and/or the turbocharger speed and/or the charging pressure and/or the driving speed and/or the engine speed and/or the amount of fuel injected and/or the exhaust temperatures and/or the catalyst temperature and/or amount of reducing agent injected and/or the exhaust-gas recirculation rate and/or the reducing-agent pressure and/or the emissions and/or the fuel/air ratio and/or the change in these variables over time.

5. A method according to one of the preceding claims, **characterised in that** the control unit determines and stores different correction values and/or different parameters of at least one correction function and/or a plurality of correction functions for different operating parameters of the internal combustion engine and/or of the exhaust aftertreatment system, and **in that** the control unit, dependent on the current operating point of the internal combustion engine and/or of the exhaust aftertreatment system, determines an operating-point-related correction value from these correction values and/or correction functions.

6. A method according to one of the preceding claims, **characterised in that** the pre-settable time t is at least 15 seconds.

**7.** A method according to one of the preceding claims, **characterised in that** the pre-settable amount of emission is determined by adding-up or integration of concentration values and/or emission masses and/or emission mass flows.

**8.** A method according to one of the preceding claims, **characterised in that** the pre-settable amount of emission is stored in units of mass and that the reaching of the pre-settable amount of emission is brought about by adding-up or integration of emission masses and/or emission mass flows, the pre-settable amount of emission for $NO_x$ being at least 1 mg and/or the pre-settable amount of emission for $NH_3$ being at least 0.01 mg and/or the pre-settable amount of emission for $N_2O$ being at least 0.02 mg and/or the pre-settable amount of emission for HNCO being at least 0.01 mg.

**9.** A method according to one of the preceding claims, **characterised in that** the operating parameters used for determining the duration of the integration or adding-up of the desired and actual values are identical to the operating parameters, the value ranges of which are checked or which are used for determining the correction value.

**10.** A method according to one of the preceding claims, **characterised in that** the operating parameters used for determining the duration of the integration or adding-up of the desired and actual values differ from the operating parameters, the value ranges of which are checked or which are used for determining the correction value.

**11.** A method according to one of the preceding claims, **characterised in that** the operating parameters used for determining the duration of the integration or adding-up of the desired and actual values are the amount of exhaust and/or the amount of fuel and/or the amount of reducing agent and/or the work produced by the internal combustion engine.

**Revendications**

**1.** Procédé applicable à une installation de post-traitement des gaz d'échappement pour doser un agent réducteur des composants d'ammoniac dans la veine des gaz d'échappement d'un moteur à combustion interne fonctionnant avec un excédent d'air, équipant un véhicule,
procédé selon lequel

- on fait le dosage de l'agent réducteur dans la veine des gaz d'échappement à l'aide d'une installation de dosage commandée par un appareil de commande et associée à l'installation de post-traitement des gaz d'échappement,
- en aval de l'installation de dosage dans la veine des gaz, l'installation de post-traitement des gaz d'échappement comporte comme autre partie, au moins un catalyseur SCR,
- la dose est déterminée par l'appareil de commande à l'aide d'un modèle enregistré dans l'appareil de commande et couvrant tous les points de fonctionnement possibles du moteur à combustion interne et/ou de l'installation de post-traitement des gaz d'échappement, selon au moins un paramètre de fonctionnement exploité par l'appareil de commande du moteur à combustion interne et/ou de l'installation de post-traitement des gaz d'échappement,

* la valeur instantanée respective d'au moins un paramètre de fonctionnement définissant le point de fonctionnement respectif du moteur à combustion interne et/ou de l'installation de post-traitement des gaz d'échappement,

- pendant le fonctionnement du moteur à combustion interne, l'appareil de commande compare une grandeur déterminée pour le point de fonctionnement respectif du moteur à combustion interne et/ou de l'installation de post-traitement des gaz d'échappement par l'appareil de commande du moteur à combustion interne à partir des valeurs en mémoire, à une grandeur proportionnelle à l'émission de consigne ou au débit de consigne, cette grandeur étant détectée par des techniques de mesure par l'appareil de commande pour l'émission réelle ou la conversion réelle,

* il détermine un écart et en fonction de cet écart, il fournit une valeur de correction du dosage et pour les opérations de dosage suivantes, il modifie le modèle en mémoire avec cette valeur de correction,

- le modèle ainsi modifié est utilisé pour le dosage par l'appareil de commande jusqu'à ce que l'appareil de commande qui compare une grandeur proportionnelle à l'émission de consigne ou à la conversion de consigne et qui est enregistrée pour le point de fonctionnement respectif du moteur à combustion interne et/ou de l'installation de post-traitement des gaz d'échappement dans l'appareil de commande du moteur à combustion interne, saisissant à nouveau par une technique de mesure la grandeur proportionnelle à l'émission réelle ou à la conversion réelle pour déterminer un écart et en fonction de cet écart, il détermine une nouvelle valeur de correction du dosage et pour les opération de dosage suivantes, il modifie le modèle mémorisé avec cette nouvelle valeur de correction,

- la détermination de l'émission réelle ou de la conversion réelle se faisant en ce que l'appareil de commande utilise la valeur de mesure fournie par un capteur d'oxydes d'azote $NO_x$ installé en aval du catalyseur SCR et/ou un capteur $NH_3$ et/ou un capteur $N_2O$ et/ou un capteur HNCO et/ou une sonde Lambda ou la conversion réelle déterminée à l'aide d'au moins l'un de ces capteurs et l'émission brute en amont du catalyseur SCR pour une durée prédéterminée (t) ou jusqu'à atteindre une quantité émise, prédéterminée ou jusqu'à ce qu'en sommant un paramètre de fonctionnement ou en intégrant un paramètre de fonctionnement, on atteint une valeur prédéterminée et en même temps on surveille si au moins ce paramètre de fonctionnement se situe dans l'une d'au moins deux plages de valeurs, les plages de valeurs étant définies par des grandeurs mémorisées dans l'appareil de commande,

- puis, lorsqu'il constate que l'on quitte la plage de valeur actuelle pendant la sommation ou l'intégration, l'appareil de commande rejette la somme obtenue par sommation ou par intégration ou si l'appareil de commande constate que l'on quitte la plage de valeurs actuelles au cours de la sommation ou de l'intégration, il enregistre de façon intermédiaire la somme obtenue par sommation ou par intégration et ensuite, si l'appareil de commande constate un retour dans la plage de valeurs quittée au préalable, il poursuit par l'addition ou l'intégration jusqu'à la fin de la durée (t) prévue pour sommer ou intégrer ou jusqu'à atteindre une quantité d'émission, prédéfinie, ou une valeur prédéfinie résultant de l'addition de l'intégration d'au moins un paramètre de fonctionnement,

- l'appareil de commande qui utilise la somme obtenue par addition ou par intégration pendant la durée prédéterminée (t) ou la quantité d'émission prédéfinie ou le travail prédéfini ou encore une grandeur proportionnelle à celle-ci comme émission réelle ou comme conversion réelle, pour la comparaison avec la valeur d'émission de consigne provenant de valeurs en mémoire ou de la conversion de consigne et détermine une valeur de correction pour la quantité dosée,

- l'appareil de commande modifie la quantité de dosage à partir du modèle avec la valeur de correction déterminée pour la plage de valeurs respective d'au moins un paramètre de fonctionnement, si la grandeur déterminée actuellement par l'appareil de commande d'au moins un paramètre de fonctionnement, se situe dans cette plage de valeurs ou en fonction de la grandeur actuelle déterminée par l'appareil de commande d'au moins un paramètre de fonctionnement, à partir des valeurs de correction pour cette grandeur actuelle, l'appareil de commande détermine directement les grandeurs voisines d'au moins un paramètre de fonctionnement par interpolation d'une valeur de correction et modifie le dosage du modèle avec cette valeur de correction.

2. Procédé selon la revendication 1,
**caractérisé en ce que**
simultanément à la détermination de l'émission réelle ou de la conversion réelle, l'appareil de commande détermine l'émission de consigne ou la conversion de consigne **en ce que** pour les points de fonctionnement parcourus par le moteur à combustion interne et/ou l'installation de post-traitement des gaz d'échappement, on additionne ou on intègre chaque fois jusqu'au point de fonctionnement, les valeurs d'émission ou de conversion idéales mémorisées dans l'appareil de commande dans la durée prédéterminée (t) jusqu'à atteindre une quantité d'émission prédéterminée ou jusqu'à atteindre une valeur prédéterminée d'au moins un paramètre de fonctionnement, et
l'appareil de commande utilise la somme ainsi obtenue ou une grandeur proportionnelle comme émission de consigne ou comme conversion de consigne pour comparer l'émission réelle ou la conversion réelle à l'émission de consigne ou à la conversion de consigne.

3. Procédé selon l'une des revendications 1 à 2,
**caractérisé en ce que**
le dosage déterminé à partir des modèles par l'appareil de commande est combiné à la valeur de correction par multiplication ou addition.

4. Procédé selon l'une des revendications 1 à 3,
**caractérisé en ce qu'**
au moins un paramètre de fonctionnement du moteur à combustion interne et/ou de l'installation de post-traitement des gaz d'échappement exploité par l'appareil de commande est la température de l'eau de refroidissement et/ou la température de l'huile et/ou la température du carburant et/ou la pression d'injection de carburant et/ou la température de l'air aspiré et/ou la température de suralimentation d'air et/ou la vitesse de rotation du turbocompresseur d'alimentation et/ou la pression de suralimentation et/ou la vitesse de déplacement et/ou le régime moteur et/ou la dose de carburant injectée et/ou la température des gaz d'échappement et/ou la température du catalyseur et/ou la dose d'agent réducteur injectée et/ou le coefficient de réinjection des gaz d'échappement et/ou la pression d'agent réducteur et/ou l'émission et/ou le rapport air/carburant et/ou la variation de ces grandeurs en fonction du temps.

**5.** Procédé selon l'une des revendications précédentes,
**caractérisé en ce que**
pour des paramètres de fonctionnement différents du moteur à combustion interne et/ou de l'installation de post-traitement des gaz d'échappement, l'appareil de commande utilise des valeurs de correction différentes et/ou des paramètres différents selon au moins une fonction de correction et/ou plusieurs fonctions de correction et les enregistre, et en fonction du paramètre de fonctionnement actuel du moteur à combustion interne et/ou de l'installation de post-traitement des gaz d'échappement, à partir de ces valeurs de correction et/ou de ces fonctions de correction, l'appareil de commande détermine une valeur de correction rapportée à un point de fonctionnement.

**6.** Procédé selon l'une des revendications précédentes,
**caractérisé en ce que**
la durée prédéterminée (t) est d'au moins 15 secondes.

**7.** Procédé selon l'une des revendications précédentes,
**caractérisé en ce que**
la quantité d'émission prédéfinie se détermine par addition ou intégration des valeurs de concentration et/ou des masses émises et/ou des débits massiques émis.

**8.** Procédé selon l'une des revendications précédentes,
**caractérisé en ce que**
la quantité d'émission prédéfinie est stockée dans des unités de masses et on atteint une quantité d'émission prédéfinie par addition ou intégration de masses émises et/ou de débits massiques émis,
la quantité d'émission prédéfinie pour des oxydes d'azote $NO_x$ étant d'au moins 1 mg et/ou la quantité d'émission prédéfinie pour $NH_3$ étant d'au moins 0,01 mg et/ou la quantité d'émission prédéfinie pour l'oxyde d'azote $N_2O$ étant d'au moins 0,02 mg et/ou la quantité d'émission prédéfinie pour HNCO étant d'au moins 0,01 mg.

**9.** Procédé selon l'une des revendications précédentes,
**caractérisé en ce que**
les paramètres de fonctionnement utilisés pour déterminer la durée de l'intégration ou de la sommation de la valeur de consigne et de la valeur réelle, est identique aux paramètres de fonctionnement dont on vérifie la plage des valeurs ou qui sont utilisés pour déterminer la valeur de correction.

**10.** Procédé selon l'une des revendications précédentes,
**caractérisé en ce que**
pour déterminer la durée de l'intégration ou de la sommation de la valeur de consigne et de la valeur réelle, les paramètres utilisés diffèrent des paramètres de fonctionnement dont on vérifie les plages de valeur ou qui sont utilisés pour déterminer la valeur de correction.

**11.** Procédé selon l'une des revendications précédentes,
**caractérisé en ce que**
pour déterminer la durée de l'intégration ou de la sommation des paramètres de fonctionnement utilisés pour les valeurs réelles et les valeurs de consigne, sont la quantité des gaz d'échappement et/ou la quantité de carburant et/ ou la quantité d'agent réducteur et/ou le travail fourni par le moteur thermique.

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 3428232 A1
- DE 4315278 A1
- DE 19536571 A1
- DE 19906344 A1
- EP 898061 A1
- DE 10100420 A1
- DE 102008017543 A1